# EUROPÄISCHE PATENTANMELDUNG

(11) **EP 2 755 007 A2**
(43) Veröffentlichungstag der Anmeldung: **16.07.2014**
(21) Anmeldenummer: 13198904.8
(22) Anmeldetag: 20.12.2013
(51) Int. Cl.: G01M 5/00, G01N 27/90, G01N 29/22, G01N 29/26, G01N 29/265, G21C 17/017

(54) **Mobiles Trägersystem für mindestens ein zur zerstörungsfreien Prüfung ausgebildetes Sensorelement**

(30) Priorität: 11.01.2013 DE 102013000685
(71) Anmelder: Fraunhofer-Gesellschaft zur Förderung der angewandten Forschung e.V., 80686 München (DE)
(72) Erfinder: Szielasko, Klaus, 66125 Saarbrücken (DE); Kurz, Jochen Horst, 66121 Saarbrücken (DE); Hussain, Wajahat, 66125 Saarbrücken (DE)
(74) Vertreter: Pfenning, Meinig & Partner GbR

(57) **Zusammenfassung**

Die Erfindung betrifft ein mobiles Trägersystem für mindestens ein zur zerstörungsfreien Prüfung ausgebildetes Sensorelement, das eine kostengünstige, flexible Lösung zur Prüfung an Prüfobjekten mit konvex gekrümmten Oberflächen, die bevorzugt langgestreckt und näherungsweise zylinderförmig ausgebildet sind. Das erfindungsgemäße Trägersystem ist zur Prüfung von Prüfobjekten, die zumindest überwiegend aus ferromagnetischem Werkstoff bestehen und eine konvex gekrümmte Oberfläche aufweisen, vorgesehen. Dafür sind an einem Rahmen zwei erste Rollen, deren Rotationsachsen parallel zueinander ausgerichtet und in einem Abstand zueinander angeordnet, befestigt. Der Abstand der beiden ersten Rollen kann mittels eines Linearantriebs verändert werden und eine der beiden ersten Rollen ist an einem senkrecht zu den Rotationsachsen der beiden ersten Rollen bewegbaren und im Rahmen geführten Schlitten befestigt. An den beiden ersten Rollen ist jeweils ein Antrieb zum Anheben und Absenken der ersten Rollen vorhanden, mit dem die ersten Rollen in Richtung auf die Oberfläche des Prüfobjektes hin oder in die entgegengesetzte Richtung dazu bewegt werden können. Zwischen den beiden ersten Rollen sind jeweils zwei Paare von zweiten Rollen, deren Rotationsachsen jeweils parallel zueinander und senkrecht zu den Rotationsachsen der ersten Rollen ausgerichtet sind, am Rahmen befestigt. Dabei weist mindestens ein Paar der zweiten Rollen einen Drehantrieb auf. Am Rahmen ist ein Permanentmagnet zum Halten des Trägersystems am Prüfobjekt sowie mindestens ein zur zerstörungsfreien Prüfung ausgebildetes Sensorelement anbringbar.

## Beschreibung

Die Erfindung betrifft ein mobiles Trägersystem für mindestens ein zur zerstörungsfreien Prüfung ausgebildetes Sensorelement, das eine kostengünstige, flexible Lösung zur Prüfung an Prüfobjekten mit konvex gekrümmten Oberflächen, die bevorzugt langgestreckt und näherungsweise zylinderförmig ausgebildet sind. Die Prüfobjekte bestehen zumindest größtenteils aus ferromagnetischem Werkstoff. Die Erfindung kann besonders vorteilhaft bei Drahtseilen auch für vollverschlossene Spiralseile als Prüfobjekt, mit verschiedenen Durchmessern ab ca. 2-3 cm, mit unterschiedlicher Gestaltung, Bündelung und Ummantelung eingesetzt werden. Die Anwendung ist aber nicht auf Drahtseile beschränkt. Auch die Prüfung von ferromagnetischen Rohren und zylinderförmigen Stäben ähnlicher Durchmesser kommt in Frage.

Drahtseile dienen z.B. in Brückenbauwerken zur Aufnahme von Zuglasten (z.B. bei Spannseilbrücken, Hängeseilbrücken, aber auch oft bei anderen Bauweisen als Spannglieder, die in Kästen unter dem Bauwerk verlaufen, die auch als externe Spannglieder an der Außenseite angebracht sein können) sowie anderen Spannbetonbauwerken, wie z.B. Trägern und Türmen von Windenergieanlagen. Aufgrund der Zugbelastung stellen vor allem Querschnittsminderungen infolge von Aderbrüchen und Rissen, die zu detektierenden Fehler dar. Im Falle von Rohren sind neben Rissen auch Wanddickenunterschiede von Interesse. Die Prüfaufgabe, bei deren Lösung die Erfindung hilft, besteht daher im Wesentlichen in der Auffindung derartiger Fehlstellen sowohl an der Oberfläche, als auch im Inneren des Prüfobjekts.

Die Verfahren und Sensoren zur Detektion der Fehler können sehr unterschiedlich sein, so dass eine Mehrzahl auch unterschiedlicher Sensoren erforderlich sein kann. Häufig wird die magnetische Streuflussprüfung eingesetzt, um rissförmige Defekte oder Wanddickenänderungen zu detektieren.

Es ist aber auch der Einsatz optischer, häufig kamerabasierter Systeme, der Einsatz von Ultraschallverfahren sowie weitere Verfahren denkbar. Die Erfindung ist diesbezüglich nicht spezialisiert, sondern soll im Wesentlichen eine Lösung zum Bewegen unterschiedlichster Sensoren über das Prüfobjekt dar-stellen. Die Erfindung dient insofern als Roboter- bzw. Manipulatorsystem, welches die Sensoren auf besonders vorteilhafte Weise über das Prüfobjekt bewegen kann.

Bisher existieren einige Systeme, die das magnetische Streuflussverfahren (oft auch als magnetinduktives Verfahren bezeichnet) einsetzen. Alle existierenden Systeme erfordern aber ein Umfassen des Prüfobjekts (z.B. des Seils) mit der Prüfsonde und sind daher auf bestimmte Durchmesser / enge Durchmesserbereiche oder Krümmungsradien der Oberflächen an Prüfobjekten festgelegt, was natürlich einen Nachteil darstellt. Bei manchen Systemen kann man die Sonden tauschen, was aber Zusatzkosten und oft suboptimale Anpassungen bewirkt, wenn man nicht sehr viele Sonden erwirbt.

Darüber hinaus bieten die herkömmlichen Systeme keine genaue Ortung der Fehler auf der Mantelfläche, sondern liefern vorwiegend die axiale Position (in Längsrichtung eines Seiles) der Fehleranzeigen, da die Sonden in der Regel über den Umfang integral arbeiten und keine Auflösung der Winkelposition bieten. Die integrale Arbeitsweise bringt auch eine geringere Empfindlichkeit gegenüber kleinen, lokalisierten Fehlern mit sich.

Bekannte Prüfsysteme für z.B. Seile müssen z.T. manuell entlang eines Seils oder das Seil muss durch das Prüfsystem hindurch bewegt werden, wie es bei Aufzügen oder Seilbahnen denkbar ist. Herkömmliche Prüfsysteme enthalten oft einen einfachen Antriebsmechanismus, der die axiale Bewegung realisiert. Die Wegmessung erfolgt in der Regel über Winkelencoder (Weggeber-Räder), die nach dem Reibrad-Prinzip auf das Prüfobjekt gesetzt werden.

Nachteilig ist es beim Stand der Technik, dass keine Systeme existieren, die kabellos (batteriebetrieben) automatisch (mit eigenem Antrieb) das Prüfobjekt äußerlich abfahren und so Messdaten über die gesamte Abwicklung der äußeren Oberfläche Messdaten sammeln.

Neben magnetischen Streufluss-Prüfsystemen für Seile sind Prüfsysteme für Lichtmasten (Straßenbeleuchtung, Lichtzeichenanlagen) bekannt, die eine Manipulationsvorrichtung zum Abfahren des Umfangs beinhalten. Diese enthalten ebenfalls ein Geberrad und einen eigenen Antrieb, sind aber kabelgebunden und bieten keine Lösung für den axialen Vortrieb. Es werden hierbei Ultraschallmessungen durchgeführt, wobei kein axialer Vortrieb erforderlich ist. Das eingesetzte Antriebsprinzip beruht auf dem Umfassen des Prüfobjekts mit einem Riemen und ist nicht durch einen axialen Antrieb erweiterbar.

Darüber hinaus ist im Falle der Pipeline-Prüfung (von innen) der Einsatz sogenannter Molche oder engl. PIGs (Pipeline Inspection Gauges) bekannt. Neben der Prüfung von innen existieren auch Prüflösungen für Pipelines, die ein Befahren mit Ultraschallscannern vorsehen, allerdings ist hierbei kein Abfahren des Umfangs üblich, sondern es wird lediglich eine Vorschubbewegung in Längsrichtung realisiert.

Andere mögliche triviale Lösungen für das Abscannen eines zylinderförmigen Prüfobjektes können das Abfahren der Oberfläche auf einer Helixbahn (Schraubenbahn) sein. Die dazu erforderliche mechanische Lösung ist sehr kompliziert und in hohem Maße durchmesserabhängig. Darüber hinaus ist es technisch schwierig, die genaue Position des Systems auf einige mm genau zu ermitteln, da aufgrund der Schraubenbewegung nur die Koordinate in diesem Helix-Koordinatensystem messbar wäre. Dies wird z.B. über ein mitlaufendes Weggeber-Reibrad erreicht, wobei aber erhebliche Messfehler schon nach wenigen Umläufen auftreten. Andere (zweiachsige) Koordinatenmessungen sind -wenn überhaupt - nur mit enormem technischem Aufwand einsetzbar. Zudem hat eine solche Lösung den Nachteil, dass das System nach vollendeter Messung auf der Helixbahn zurückkehren müsste, was erhebliche Messzeit in Anspruch nimmt.

Eine weitere Möglichkeit ist das Abfahren der Oberfläche mit einem bauteilumfassenden Sensorgürtel (d.h. ein flexibles Band mit einer Reihe von Sensoren). Dadurch ist nur eine Längsbewegung nötig und die Koordinatenmessung einfach. Aber insbesondere im Falle der magnetischen Streuflussprüfung, die eine Hauptanwendung darstellt, ist der Sensorgürtel, der auch eine umfassende Magnetisierungsvorrichtung beinhalten müsste, sehr schwer und -vor allem - durchmesserspezifisch. Im Falle von teureren Sensoren (Kameras, Ultraschallwandler, etc.) ist ein Sensorgürtel schlicht preislich nicht vorstellbar.

So ist in DE 196 17 789 A1 eine Inspektionseinrichtung für Lichtmasten beschrieben, die eine Spannvorrichtung, eine Sensoreinheit und eine Bewegungsvorrichtung für die Sensoreinheit nutzt.

Aus US 4,919,223 B ist eine Vorrichtung zur Prüfung runder Leitungen bekannt. Mit einem Paar von Elementen, die in einem Abstands zueinander und entlang einer gemeinsamen Achse angeordnet sind, soll diese Prüfung durchgeführt werden.

Eine Scanvorrichtung für Rohre ist aus US 2010/0275691 A1 bekannt. Es wird ein Hauptträger für einen Sensor eingesetzt, der um eine Rohr an verschiedenen Positionen angeordnet ist.

Es ist daher Aufgabe der Erfindung, Möglichkeiten anzugeben, mit denen eine zerstörungsfreie Prüfung an Prüfobjekten mit sphärisch gekrümmter Oberfläche, flexibel, zumindest überwiegend unabhängig vom Außendurchmesser oder Krümmungsradius der Oberfläche des jeweiligen Prüfobjektes durchführbar ist, und dabei eine zweiachsige Bewegung erfolgen kann. Erfindungsgemäß wird diese Aufgabe mit einem mobilen Trägersystem, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Das erfindungsgemäße mobile Trägersystem für mindestens ein zur zerstörungsfreien Prüfung ausgebildetes Sensorelement, das zur Prüfung von Prüfobjekten, die zumindest überwiegend aus ferromagnetischem Werkstoff bestehen und eine konvex gekrümmte Oberfläche aufweisen, weist an einem Rahmen zwei erste Rollen, deren Rotationsachsen parallel zueinander ausgerichtet sind, auf. Die ersten Rollen sind in einem Abstand zueinander angeordnet. Der Abstand der beiden ersten Rollen kann mittels eines Linearantriebs verändert werden. Dazu ist eine der beiden ersten Rollen an einem senkrecht zu den Rotationsachsen der beiden ersten Rollen bewegbaren und im Rahmen geführten Schlitten befestigt. An den beiden ersten Rollen ist jeweils ein Antrieb zum Anheben und Absenken der ersten Rollen vorhanden, mit dem die ersten Rollen in Richtung auf die Oberfläche des Prüfobjektes hin oder in die entgegengesetzte Richtung dazu bewegt werden können. Durch diese Ausführung kann eine Bewegung des Trägersystems in eine Achsrichtung erfolgen, was nachfolgend noch zu erläutern sein wird. Diese Achsrichtung ist in der Regel die Längsachse eines Prüfobjektes.

Am Trägersystem sind außerdem zwischen den beiden ersten Rollen jeweils zwei Paare von zweiten Rollen, deren Rotationsachsen jeweils parallel zueinander und senkrecht zu den Rotationsachsen der ersten Rollen ausgerichtet sind, am Rahmen befestigt. Dabei weist mindestens ein Paar der zweiten Rollen einen Drehantrieb auf, mit dessen Hilfe eine Bewegung des Trägersystems in eine zweite Achsrichtung, die senkrecht zur bereits erwähnten Achsrichtung ausgerichtet ist, möglich ist. Ein Paar der zweiten Rollen kann gemeinsam mit einer der ersten Rollen auf dem Linearschlitten angeordnet sein.

Der Linearantrieb kann an einer Seite mit dem Schlitten und an der anderen Seite mit dem Rahmen oder mit der Fixierung der nicht am Schlitten befestigten ersten Rolle, verbunden sein. Der Schlitten kann in Längsführungen, die am Rahmen vorhanden sind, geführt sein und sich entlang der Längsführungen in der Achsrichtung bewegen, die senkrecht zur Rotationsachse der ersten Rollen ausgerichtet ist.

Am Rahmen sind außerdem ein Magnet zum Halten des Trägersystems am Prüfobjekt sowie mindestens ein zur zerstörungsfreien Prüfung ausgebildetes Sensorelement angebracht oder dort anbringbar. Ein Magnet sollte so ausgewählt werden, dass ein sicheres alleiniges Haften des Trägersystems am Prüfobjekt gewährleistet werden kann.

Für die Durchführung unterschiedlicher Prüfverfahren können also mehrere auch unterschiedliche Sensorelemente bei einem Prüflauf gemeinsam oder auch in unterschiedlichen Prüfläufen bzw. an verschiedenen Prüfobjekten eingesetzt werden, so dass ein erfindungsgemäßes Trägersystem flexibel einsetzbar ist.

Der Linearantrieb mit dem der Abstand zwischen den beiden ersten Rollen verändert werden kann, kann vorteilhaft ein Zahnstangen-, Spindel- oder ein Kolbenantrieb sein. Eine besonders kostengünstige Lösung ist die Ausführung des Linearantriebs mit einem auf dem Schlitten oder dem Träger befestigten elektromotorischen Aktuator, z.B. einem Schwenkhebel- oder Exzenterantrieb.

Günstig wirkt es sich auch aus, wenn ein Elektroenergiespeicher vorhanden ist. Dadurch kann die Mobilität des Trägersystems zusätzlich erhöht bzw. verbessert werden, da auf eine Zuführleitung für Energie verzichtet werden kann.

Außerdem kann eine elektronische Steuereinheit vorhanden sein. In die elektronische Steuereinheit kann dabei mindestens ein Sensorelement, besonders bevorzugt ein Beschleunigungssensor integriert sein. Es ist aber auch die Integration eines zur Durchführung magnetischer Streuflussmessungen ausgebildeten Sensorelements möglich und vorteilhaft. Ein Beschleunigungssensor kann zur Detektion des oberen Totpunktes genutzt werden. Er kann aber auch zur Positionsbestimmung des Trägersystems bei einer Prüfung an einem Prüfobjekt ggf. mit einem genauen Navigationssystem, beispielsweise mittels GPS unterstützt, genutzt werden.

Es besteht die Möglichkeit, dass ein Paar der zweiten Rollen am Schlitten befestigt ist.

Die Antriebe zum Anheben und Absenken der ersten Rollen, der Rotation zweiter Rollen und der Linearantrieb sollten an die elektronische Steuerung angeschlossen sein.

Günstig ist es ein Modul zur drahtlosen Datenübertragung vorzusehen, mit dem Messwerte und Steuersignale übertragen werden können, so dass ein ggf. vorhandener elektronischer Speicher kleiner dimensioniert sein kann.

Für einen kabellosen Betrieb sollte auch ein Elektroenergiespeicher mit ausreichender Speicherkapazität vorhanden sein.

Die Erfindung stellt eine nicht triviale technische Lösung für einen kombinierten Umfangs- (Rotations-) und Axial- (Linear-) Antrieb eines Trägersystems, das diverse Sensorelemente beherbergen kann, dar. Im Gegensatz zu existierenden Manipulatorvorrichtungen kann das erfindungsgemäße Trägersystem nur aufgesetzt werden und umfasst das Prüfobjekt nicht. Das Trägersystem kann sich durch magnetische Anziehungskraft am ferromagnetischen Prüfobjekt halten. Die Mechanik bietet einen Antrieb für die Rotationsrichtung (Bewegung 1x um das Prüfobjekt herum, üblicherweise inklusive Durchführung der Messung, z.B. magnetischer Streufluss-Scan) und einen Antrieb für die Längsachsrichtung (definierter Vorschub des gesamten Trägersystems in einer bestimmten Distanz). Da die für beide Bewegungsachsrichtungen verantwortlichen ersten und zweiten Rollen einander gegenseitig hemmen können, besitzt der Aufbau eine Möglichkeit, die Rollen individuell anzuheben oder abzusenken. Hierdurch wird auch die Fortbewegung bewerkstelligt, wie später noch erläutert werden soll.

Mit der Erfindung können folgende Vorteile erreicht werden:
■ Aufsetzen nur von einer Seite auf ein Prüfobjekt, das Prüfobjekt muss nicht umfasst werden, daher besonders einfach und flexibel.
■ Anhaften am Prüfobjekt durch magnetische Anziehungskraft - dies ermöglicht das einfache Aufsetzen ohne Umfassen des Prüfobjektes
■ keine Beschränkung auf bestimmte Außendurchmesser, lediglich ein Mindestdurchmesser von ca. 2-3 cm kann ggf. als technische Voraussetzung gelten. Theoretisch könnte der Durchmesser auch "unendlich groß" sein, d.h. das Prüfobjekt dürfte eine ebene Oberfläche besitzen.
■ genaue Winkel- und Längenpositionszuordnung der Fehleranzeigen (anhand von Encoder- und Beschleunigungssensorsignalen sowie der Anzahl der Schlitten-Vorwärtsbewegungen), also weniger Schlupf bei der Positionsbestimmung, als dies z.B. bei einer Helixbewegung der Fall wäre.
■ keine Kabelanbindung, daher flexibel und mobil einsetzbar
■ technisch einfache und mit kostengünstigen Komponenten umsetzbare Bewegungsmechanik
■ Modular erweiterbar durch verschiedene Prüfverfahren (magnetischer Streufluss, Optisch, Ultraschall, Wirbelstrom, etc.) bei gleichem Fortbewegungsprinzip. Hierbei wird nur ein einziges Sensorelement des jeweiligen Verfahrens benötigt (kein Sensorarray nötig, was Kosten und Gewicht spart)
■ schnelle Rückkehr nach Ende einer Messung bzw. eines Prüflaufs durch optionales Weglassen der Rotationsbewegung (hierdurch trotz vollflächiger Abtastung im Messbetrieb kurze Zeit für die Rückkehr)

Nachfolgend soll die Erfindung beispielhaft näher erläutert werden.

Dabei zeigen:
Figur 1 eine Seitenansicht eines Beispiels eines erfindungsgemäßen Trägersystems;
Figur 2 die Draufsicht des Beispiels nach Figur 1;
Figur 3 in mehreren Phasen des Betriebes die Bewegung des in den Figuren 1 und 2 gezeigten Beispiels in eine Achsrichtung, die senkrecht zu den Rotationsachsen der ersten Rollen ausgerichtet ist und
Figur 4 ein erfindungsgemäßes Trägersystem, das auf Prüfobjekte mit mehreren unterschiedlichen Krümmungsradien aufgesetzt ist.

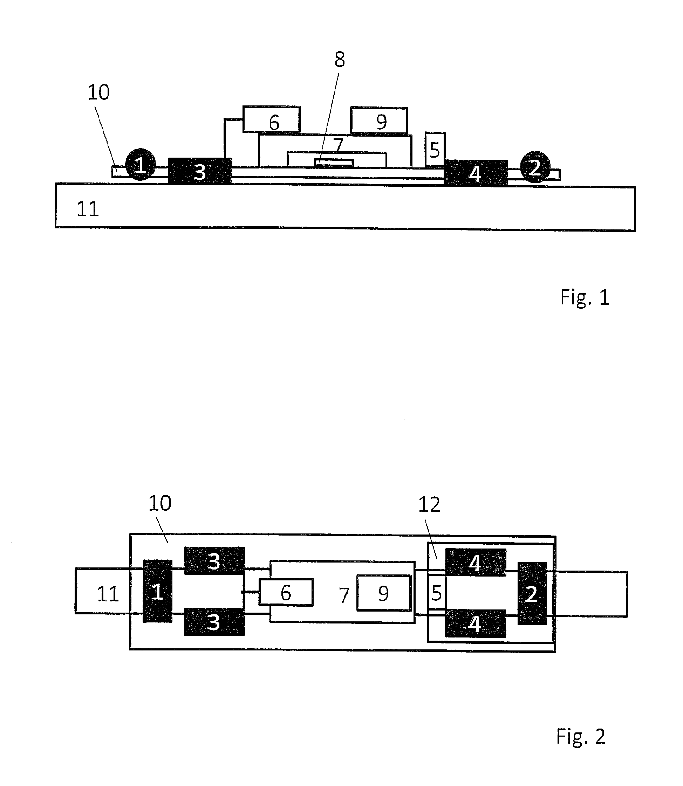

Bei dem in den Figuren 1 und 2 gezeigten Beispiel sind an einem vorderen und hinteren Stirnende eines Rahmens 10 jeweils eine erste Rolle 1 und 2 angeordnet und zumindest eine der beiden ersten Rollen 1 und 2 ist so befestigt, dass der Abstand zwischen den beiden ersten Rollen 1 und 2 verändert werden kann. Bei diesem Beispiel ist die eine erste Rolle 2 an einem verschiebbaren Schlitten 12 befestigt. Der Schlitten 12 kann translatorisch in der Achsrichtung hin und her verschoben werden, die senkrecht zur Rotationsachse der ersten Rollen 1 und 2 ausgerichtet ist.

Es sind zwei Paare zweiter Rollen 3 und 4 am Rahmen 10 und dem Schlitten 12 befestigt. Ihre Rotationsachsen sind parallel zur Bewegungsrichtung des Schlittens und senkrecht zur Rotationsachse der ersten Rollen 1 und 2 ausgerichtet.

An den ersten Rollen 1 und 2 sind nicht dargestellte Antriebe vorhanden oder greifen dort an. Mit diesen Antrieben können die ersten Rollen 1 und 2 in Richtung auf das Prüfobjekt 11 und von diesem weg bewegt werden, so dass die ersten Rollen 1 und 2 je nach Einstellung die Oberfläche des Prüfobjekts 11 berühren oder von dort los gelöst frei schweben. Werden die ersten Rollen 1 oder 2 besonders weit in Richtung auf das Prüfobjekt zu geschwenkt, so hebt sich der Schlitten 12 einseitig und somit auch die zweiten Rollenpaare 3 oder 4 von der Oberfläche des Prüfobjektes ab.

Für eine Bewegung des Trägersystems in die Achsrichtung, die senkrecht zur den Rotationsachsen der ersten Rollen 1 und 2 ausgerichtet ist, ist bei diesem Beispiel ein Linearantrieb 5 vorhanden, der am Schlitten 12 und an der anderen Seite am Rahmen 10 befestigt ist. Mit dem Linearantrieb 5 kann der Schlitten in der oben erwähnten Achsrichtung hin und her bewegt werden. Dadurch kann der Abstand zwischen den beiden ersten Rollen 1 und 2 (bzw. hierdurch auch der Abstand zwischen den zweiten Rollen 3 und 4) verändert werden.

Bei diesem Beispiel ist ein Drehantrieb 6 vorhanden mit dessen Hilfe ein Paar der zweiten Rollen 3 rotieren kann. In einigen Fällen kann es auch hilfreich sein, beide zweiten Rollenpaare 3 und 4 anzutreiben. Werden diese Rollen 3 gleichsinnig gedreht kann sich das Trägersystem in der Achsrichtung, die parallel zu den Rotationsachsen der ersten Rollen 1 und 2 ausgerichtet ist, bewegen. Eine gegensinnige Bewegung ist bei entgegengesetzter Drehung der zweiten Rollen 3 möglich.

Bei dem hier gezeigten Beispiel sind am Rahmen 10 noch ein Magnet 7, eine elektronische Steuerung 8 und ein Elektroenergiespeicher 9 vorhanden, die die im allgemeinen Teil der Beschreibung erwähnten Aufgaben erfüllen können und entsprechend ausgestaltet sein können. Auf die Darstellung eines Sensorelementes ist verzichtet worden. Ein oder mehrerer Sensorelemente können aber ohne weiteres an geeigneten Stellen des Trägersystems, insbesondere an dessen Rahmen 10 angebracht werden. Entsprechende Aufnahmen für Sensorelemente können dort bereits vorhanden sein, so dass Sensorelemente bei einem Austausch leicht befestigt oder wieder entfernt werden können.

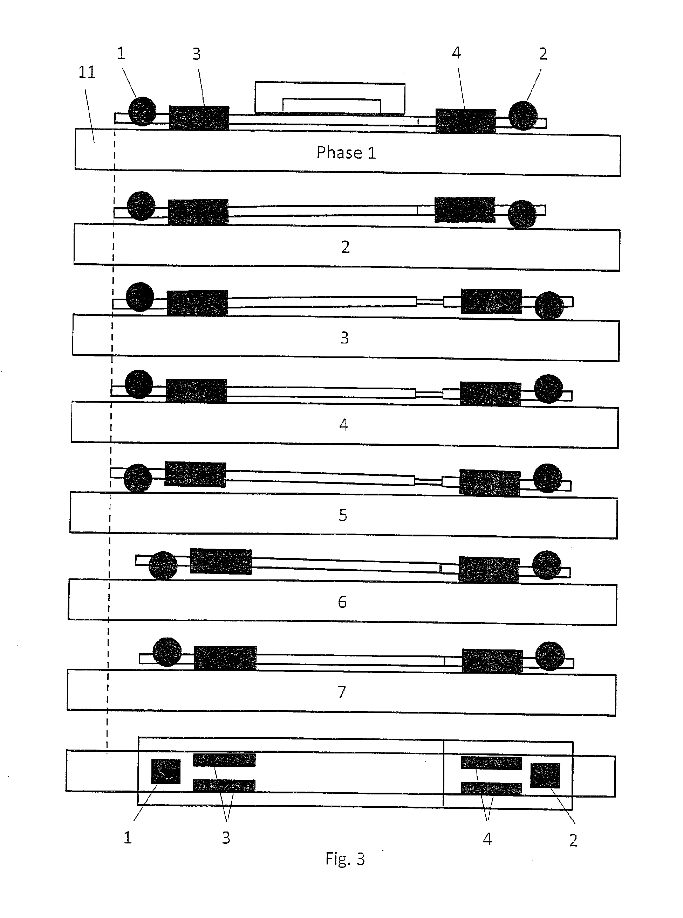

In der Figur 3 sind sieben unterschiedliche Betriebsphasen/-zustände in einer Seitenansicht gezeigt.

In der obersten Darstellung, die mit 1 gekennzeichnet ist, befinden sich die beiden ersten Rollen 1 und 2 in einer angehobenen Stellung und das Trägersystem liegt lediglich mit den zweiten Rollen 3 und 4 auf der Oberfläche des Prüfobjekts 11 auf.

Bei der darunter angeordneten Darstellung 2 ist die hier rechts angeordnete erste Rolle 2 abgesenkt und berührt ebenfalls die Oberfläche des Prüfobjekts 11, die andere erste Rolle 1 ist angehoben.

Die wiederum darunter angeordnete Darstellung 3 zeigt, wie durch Aktivierung des Linearantriebs 5 der Abstand zwischen den ersten Rollen 1 und 2 vergrößert wird, indem der Schlitten 12 bei diesem Beispiel nach rechts verschoben wird.

Bei ausreichend vergrößertem Abstand zwischen den beiden ersten Rollen 1 und 2 wird die hier rechts dargestellte erste Rolle 2 wieder angehoben, so dass das Trägersystem wieder nur mit den zweiten Rollen 3 und 4 mit der Oberfläche des Prüfobjekts 11 in Berührung steht. Anschließend wird die hier links angeordnete erste Rolle 1 abgesenkt. Diese beiden Phasen sind in den Darstellungen 4 und 5 gezeigt.

Mit der darunter angeordneten Darstellung 6 soll verdeutlicht werden, dass durch eine erneute Aktivierung des Linearantriebs 5 der Abstand zwischen den ersten Rollen 1 und 2 wieder verkleinert wird, indem der Schlitten 12 nach links bewegt, also vom Linearantrieb 5 gezogen wird.

Das Trägersystem kann so infolge der Haftreibung und der Veränderung des Abstandes der ersten Rollen 1 und 2 zueinander ähnlich bewegt werden, wie dies von Raupen bekannt ist. Es ist dadurch eine translatorische Bewegung in eine Achsrichtung, die bei diesem Beispiel parallel zur Oberfläche des Prüfobjekts 11 und in diesen Darstellungen horizontal ausgerichtet, möglich.

Die Darstellung 7 zeigt wieder den Ausgangszustand und entspricht der Darstellung 1,

In der untersten Darstellung von Figur 3 ist eine Draufsicht gezeigt.

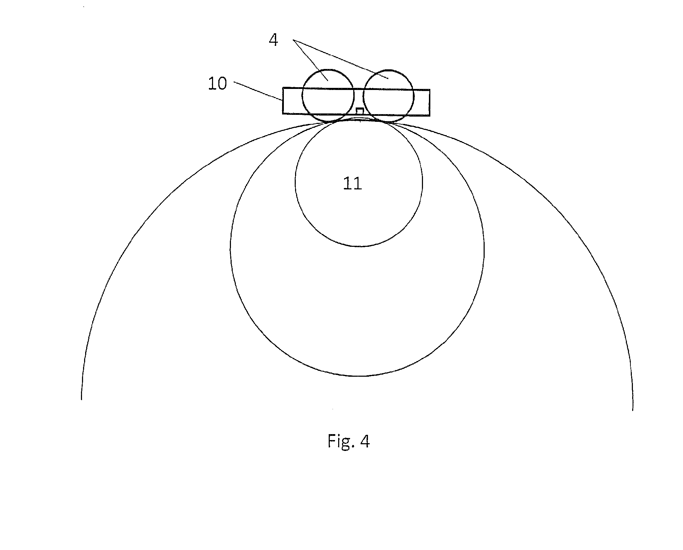

Mit Figur 4 kann verdeutlicht werden, wie sich unterschiedliche Krümmungsradien von Oberflächen von Prüfobjekten wenn überhaupt nur geringfügig auswirken.

Das Trägersystem berührt dabei lediglich mit seinen zweiten Rollen 3 und 4 die Oberfläche des Prüfobjektes 11, von dem hier beispielhaft drei sehr unterschiedliche Krümmungsradien dargestellt sind. Es wird deutlich, dass der jeweilige Radius nur einen zu vernachlässigenden Einfluss auf die Mobilität und die Messgenauigkeit von Sensorelementen hat, da sich deren Abstand zur Oberfläche des Prüfobjektes 11 nur sehr geringfügig ändert.

Entsprechend Figur 3 ist eine raupenähnliche Fortbewegung in Längsrichtung möglich (Trägersystem hebt sich einseitig an, verlängert die Rollendistanz einseitig, senkt sich ab, hebt sich auf der anderen Seite an, verkürzt die Rollendistanz wieder und senkt sich ab). Diese Bewegung ist technisch einfach umsetzbar und ermöglicht die Kombination von Linear- und Rotationsbewegung bei gleichzeitig genauer Information über die in beiden Richtungen vorherrschende Position.

Einen erheblichen Beitrag zur Unabhängigkeit vom Durchmesser des Prüfobjekts 11, ist der mit wachsendem Außendurchmesser zunehmend geringe Einfluss des Außendurchmessers der Oberfläche auf den Abstand zum Prüfobjekt.

## Patentansprüche

1. Mobiles Trägersystem für mindestens ein zur zerstörungsfreien Prüfung ausgebildetes Sensorelement, das zur Prüfung von Prüfobjekten, die zumindest überwiegend aus ferromagnetischem Werkstoff bestehen und eine konvex gekrümmte Oberfläche aufweisen, einsetzbar ist, bei dem
an einem Rahmen (10) zwei erste Rollen (1 und 2), deren Rotationsachsen parallel zueinander ausgerichtet und in einem Abstand zueinander angeordnet sind, befestigt sind, wobei der Abstand der beiden ersten Rollen (1 und 2) mittels eines Linearantriebs (5) veränderbar und eine der beiden ersten Rollen (1 oder2) an einem senkrecht zu den Rotationsachsen der beiden ersten Rollen (1 und 2) bewegbaren und im Rahmen (10) geführten Schlitten (12) befestigt ist;
dabei an den beiden ersten Rollen (1 und 2) jeweils ein Antrieb zum Anheben und Absenken der ersten Rollen (1 und 2) vorhanden ist, mit dem die ersten Rollen (1 und 2) in Richtung auf die Oberfläche des Prüfobjektes (11) hin oder in die entgegengesetzte Richtung dazu bewegbar sind; und
zwischen den beiden ersten Rollen (1 und 2) jeweils zwei Paare von zweiten Rollen (3 und 4), deren Rotationsachsen jeweils parallel zueinander und senkrecht zu den Rotationsachsen der ersten Rollen (1 und 2) ausgerichtet sind, am Rahmen (10) befestigt sind und dabei mindestens ein Paar der zweiten Rollen (3 oder 4)einen Drehantrieb (6) aufweisen und
am Rahmen (10) ein Permanentmagnet (7) zum Halten des Trägersystems am Prüfobjekt (11) sowie mindestens ein zur zerstörungsfreien Prüfung ausgebildetes Sensorelement anbringbar sind.

2. Trägersystem nach Anspruch 1, **dadurch gekennzeichnet, dass** der Linearantrieb (5) ein Zahnstangen-, Spindel- oder ein Kolbenantrieb ist oder einen elektromotorischen Hebel- oder Exzentermechanismus besitzt.

3. Trägersystem nach Anspruch 1 oder 2, **dadurch gekennzeichnet, dass** ein Elektroenergiespeicher (9) vorhanden ist.

4. Trägersystem nach einem der vorhergehenden Ansprüche, **dadurch gekennzeichnet, dass** unterschiedliche Sensorelemente vorhanden oder austauschbar befestigbar sind.

5. Trägersystem nach einem der vorhergehenden Ansprüche, **dadurch gekennzeichnet, dass** eine elektronische Steuereinheit (8) vorhanden ist.

6. Trägersystem nach Anspruch5, **dadurch gekennzeichnet, dass** in die elektronische Steuereinheit mindestens ein Sensorelement oder ein Beschleunigungssensor integriert ist.

7. Trägersystem nach einem der vorhergehenden Ansprüche, **dadurch gekennzeichnet, dass** ein Paar der zweiten Rollen (4) am Schlitten (12) befestigt ist.

8. Trägersystem nach einem der vorhergehenden Ansprüche, **dadurch gekennzeichnet, dass** die Antriebe zum Anheben und Absenken der ersten Rollen (1 und 2), der Rotation zweiter Rollen (3, 4) und der Linearantrieb (5) an die elektronische Steuerung (8) angeschlossen sind.

9. Trägersystem nach einem der vorhergehenden Ansprüche, **dadurch gekennzeichnet, dass** ein Modul zur drahtlosen Datenübertragung vorhanden ist.

10. Verwendung des Trägersystems nach einem der vorhergehenden Ansprüche zur zerstörungsfreien Prüfung von Drahtseilen, Rohren oder Stäben.
